# EUROPEAN PATENT APPLICATION

(11) **EP 1 566 898 A2**
(43) Date of publication of application: **24.08.2005**
(21) Application number: 05002502.2
(22) Date of filing: 07.02.2005
(51) Int. Cl.: H04B 7/08, H04N 5/44

(54) **TV receiver and diversity receiving method**

(30) Priority: 20.02.2004 JP 2004045452
(71) Applicant: Pioneer Corporation, Tokyo-to (JP)
(72) Inventor: Takatori, Yuji, Pioneer Corporation, Kawagoe-shi, Saitama-ken (JP); Suzuki, Satoru, Pioneer Corporation, Kawagoe-shi, Saitama-ken (JP)
(74) Representative: Tappe, Hartmut

(57) **Abstract**

When an antenna (201) which is favorable in receiving state is selected from among a plurality of antennas (201) by an antenna selector (202), white noise is caused in a video signal (Vout) by AGC characteristics of an AGC circuit (203a) in a tuner (203), and displayed on a display screen. A switching control unit (206) exercises luminance altering control for a luminance altering unit (204) on the basis of an output level difference or the like of the AGC circuit (203a) , lowers luminance of a white noise generating region only during a white noise generating interval, and thereby makes the white noise inconspicuous.

## Description

### BACKGROUND OF THE INVENTION

### 1.Field of the Invention

The present invention mainly relates to a TV receiver and a diversity receiving method. However, use of the invention is not restricted to the TV receiver and the diversity receiving method.

### 2.Description of the Related Art

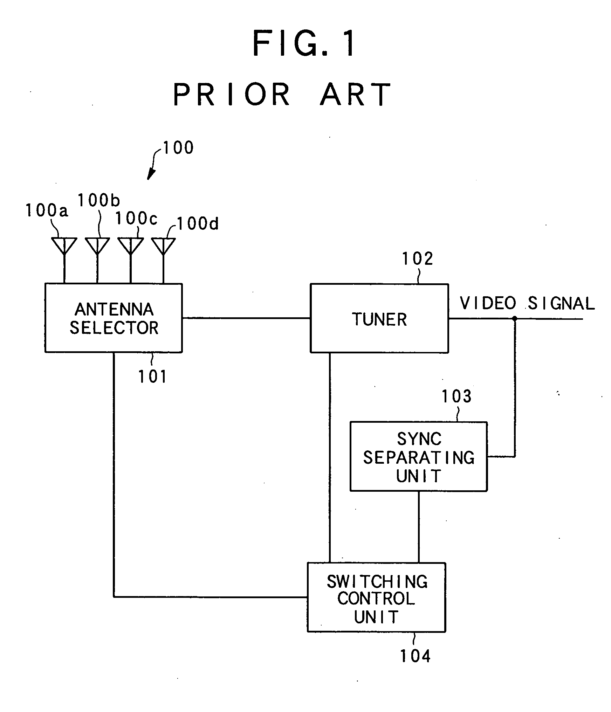

Heretofore, diversity reception in TV receivers is used as a method for stably receiving a reception radio wave. FIG. 1 is a block diagram showing a TV receiver according to a conventional technique. In order to conduct diversity reception, there are provided two or more antennas 100 (in the illustrated example, four antennas 100a to 100d), an antenna selector 101 which selects an antenna 100 that is favorable in receiving state from among a plurality of antennas 100, a tuner 102 which converts a received signal (RF signal) received from the antenna 100 selected by the antenna selector 101 to a video signal and outputs the video signal, a sync separating unit 103 which detects signal synchronization, and switching control unit 104 which controls antenna switching conducted by the antenna selector 101 on the basis of the receiving state of the received signal.

The diversity operation in the TV receiver is executed and controlled by the switching control unit 104. In an interval during which an image is not displayed, that is, in a vertical sync retrace interval, switching to some antenna 100 that is favorable in receiving state is conducted on the basis of vertical sync detection conducted by the sync separating unit 103.

If a situation where the sync state cannot be discriminated due to a weak electric field or the like occurs in the above conventional configuration, however, the antenna switching operation is conducted in an image display interval and white lateral line noise appears on the display screen. This can be mentioned as an example of problems in the conventional configuration. The tuner 102 includes an AGC circuit (not illustrated) which makes the gain constant. When the variation of the received level is great, the AGC output does not become stable within the vertical sync retrace interval and white noise appears in a partial region such as an upper part of the display screen, even if a gain control operation in the AGC circuit is started at the time of switching of the antenna 100. It can be mentioned as an example of problems in the conventional configuration.

As a configuration which reduces noise on an image at the time of antenna switching in the TV receiver which conducts such diversity reception, there is a technique of providing filter coefficients of a filter used to average video signals when antennas are switched with large values, improving the signal-to-noise ratio of the filter, and reducing the noise on an image under display (see, for example, Japanese Patent Application Laid-Open Publication No. 2002-33688). In the technique described in Japanese Patent Application Laid-Open Publication No. 2002-33688, the whole display screen is uniformly blurred although noise can be reduced. This can be mentioned as an example of problems in the conventional configuration.

### SUMMARY OF THE INVENTION

A TV receiver according to the invention comprises:
a plurality of antennas which receive a transmission signal;
an antenna selecting device which selects an antenna from among the antennas;
a tuner which demodulates the transmission signal received by the antenna which is selected by the antenna selecting device, and outputs a display signal;
a luminance altering device which alters luminance of the display signal output from the tuner for a pertinent display region at the time of luminance altering control request; and
a switching control device which controls the antenna selection in the antenna selecting device and outputs the luminance altering control request to the luminance altering device at the time of the antenna selection.

A diversity receiving method according to the invention comprises:
an antenna selecting process which selects an antenna from among antennas which have received a transmission signal;
a display signal output process which demodulates the transmission signal received by the antenna which is selected at the antenna selecting process, and outputting a display signal;
a luminance altering process which alters luminance of the display signal output at the display signal output process for a pertinent display region at the time of luminance altering control request; and
a switching control process which controls the antenna selection at the antenna selecting process and requests the luminance altering control at the luminance altering process at the time of the antenna selection.

### BRIEF DESCRIPTION OF THE DRAWINGS

FIG. 1 is a block diagram showing a TV receiver according to a conventional technique;
FIG. 2 is a block diagram showing a general configuration of a TV receiver in embodiments;
FIG. 3 is a circuit diagram showing an example of a luminance altering unit;
FIG. 4 is a flow chart showing a luminance altering operation in a first embodiment;
FIG. 5A to Fig. 5D are timing charts showing signal states at various points in a TV receiver;
FIG. 6 is a flow chart showing a luminance altering operation in a second embodiment;
FIG. 7 is a flow chart showing a luminance altering operation in a third embodiment;
FIG. 8 is a diagram explaining correspondence between the vertical sync signal and the display screen; and
FIG. 9 is a flow chart showing a luminance altering operation in a fourth embodiment.

### DETAILED DESCRIPTION OF THE PREFERRED EMBODIMENTS

Hereafter, preferred embodiments of a TV receiver and a diversity receiving method according to the present invention will be described in detail with reference to accompanying drawings.

One of objects of the embodiments is to make noise generated on the display screen inconspicuous when antenna switching is conducted by the diversity operation.

### (Embodiment)

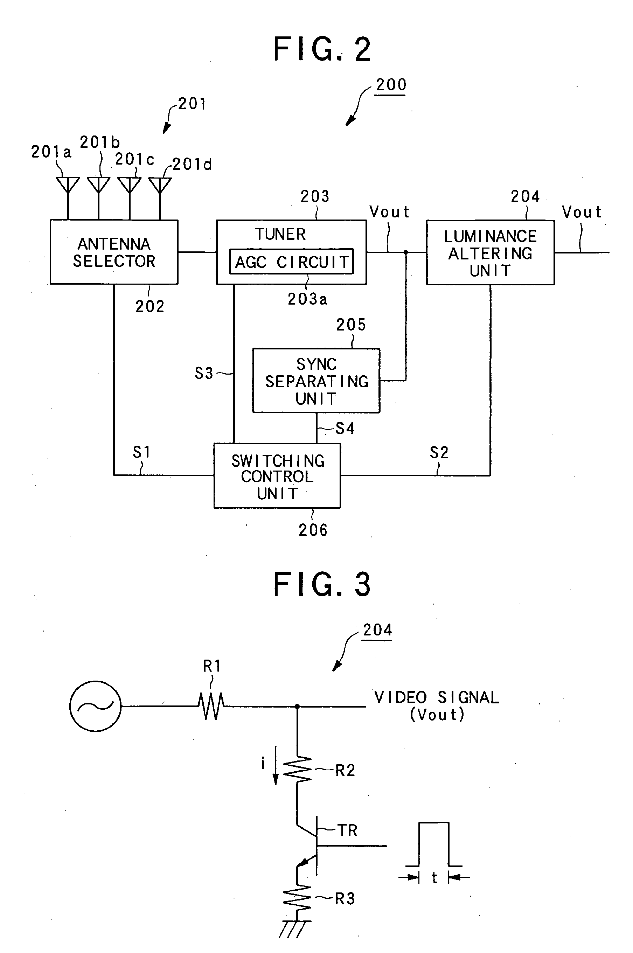

Now, embodiments according to the invention will be described. FIG. 2 is a block diagram showing a general configuration of a TV receiver in embodiments. In the following description, a configuration example in which one antenna is selected by the antenna switching and a radio wave is received by the antenna will be described.

In order to conduct the diversity reception, a TV receiver 200 includes two or more antennas 201 (in the illustrated example, four antennas 201a to 201d), an antenna selector 202 serving as an antenna selecting device, a tuner 203, a luminance altering unit 204 serving as a luminance altering device, a sync separating unit 205, and a switching control unit 206 serving as a switching control device.

The antenna selector 202 selects an antenna 201 which is favorable in receiving state among the antennas 201 on the basis of a control signal S1 output from the switching control unit 206.

The tuner 203 converts a received signal (RF signal) received from the antenna 201 which is selected by the antenna selector 202 to a video signal Vₒᵤₜ serving as a display signal and outputs the video signal Vₒᵤₜ. The tuner 203 includes an AGC (Auto Gain Control) circuit 203a therein. The AGC circuit 203a has a function of varying the gain when its input level has changed and thereby making its output level constant. The tuner 203 outputs a state signal S3 concerning preset states included in the received level of the RF signal, the input level to the AGC circuit 203a, its output level difference, and change characteristics such as overshoots caused in a control signal at the time of AGC control, to the switching control unit 206.

The luminance altering unit 204 alters a bias level (a DC level of the video signal in intervals during which clamping is not conducted) of the video signal Vₒᵤₜ output from the tuner 203 on the basis of a control signal S2 output from the switching control unit 206 at the time of antenna switching, and outputs a resultant video signal Vₒᵤₜ to a display unit which is not illustrated. FIG. 3 is a circuit diagram showing an example of the luminance altering unit. The luminance altering unit 204 lowers the luminance in the video signal Vₒᵤₜ by bias control. As for a current i which flows between a collector and an emitter of a transistor TR provided in an output stage for the video signal Vₒᵤₜ, the quantity of the current that flows to the ground can be controlled by applying a control signal S2. Typically, the impedance of the video signal Vₒᵤₜ is set equal to a constant characteristic impedance RΩ (for example, 75 Ω). For convenience of description, it is now assumed that each of resistors R1 and R2 has RΩ which is equal to the characteristic impedance. When a ground resistor R3 is set equal to a suitable value and the control signal S2 is applied, the current i which flows from TR to the ground can be doubled, and the luminance can be reduced to half by reducing the output voltage of the video signal Vₒᵤₜ to half. If at this time the video signal Vₒᵤₜ is not clamped and the video signal Vₒᵤₜ becomes white 100% in level, then the (screen) display luminance is lowered to a nearly gray color of approximately 50%. The period of time during which the luminance of the video signal Vₒᵤₜ is lowered can be altered so as to correspond to an applying time t of the control signal S2. By altering the voltage value of the control signal S2, the lowered luminance level can be altered so as to correspond thereto.

The sync separating unit 205 detects a sync of the video signal Vₒᵤₜ output by the tuner 203, and outputs a sync signal S4 to the switching control unit 206 over the detected interval.

The switching control unit 206 outputs the control signal S1 to the antenna selector 202 to instruct switching of the antenna 201 on the basis of the state signal S3 which indicates the receiving state of the received signal in the tuner 203. Furthermore, the switching control unit 206 outputs the control signal S2 to the luminance altering unit 204 to instruct luminance alteration. The switching control unit 206 outputs the control signal S1 so as to conduct switching to some antenna 201 that is favorable in receiving state in an interval during which an image is not displayed, that is, in the vertical sync retrace interval, in the state in which the vertical sync is detected by the sync separating unit 205. For example, when the vertical sync cannot be clearly discriminated, the switching control unit 206 sometimes outputs the antenna switching control signal S1 in the video interval. In accordance with the output of the control signal S1 which switches antennas, the switching control unit 206 outputs the control signal S2 to the luminance altering unit 204. Although described later, the output interval of the control signal S2 is altered according to a change of the received level or the like indicated by the state signal S3 or a state change of a sync signal S4 output by the sync separating unit 205, during a constant interval.

Embodiments of a TV receiver having the above-described configuration will now be described. In the embodiments, the switching control unit 206 exercises supervision control, and the luminance altering unit 204 alters the luminance in the video signal Vₒᵤₜ under the control of the switching control unit 206.

### (First Embodiment)

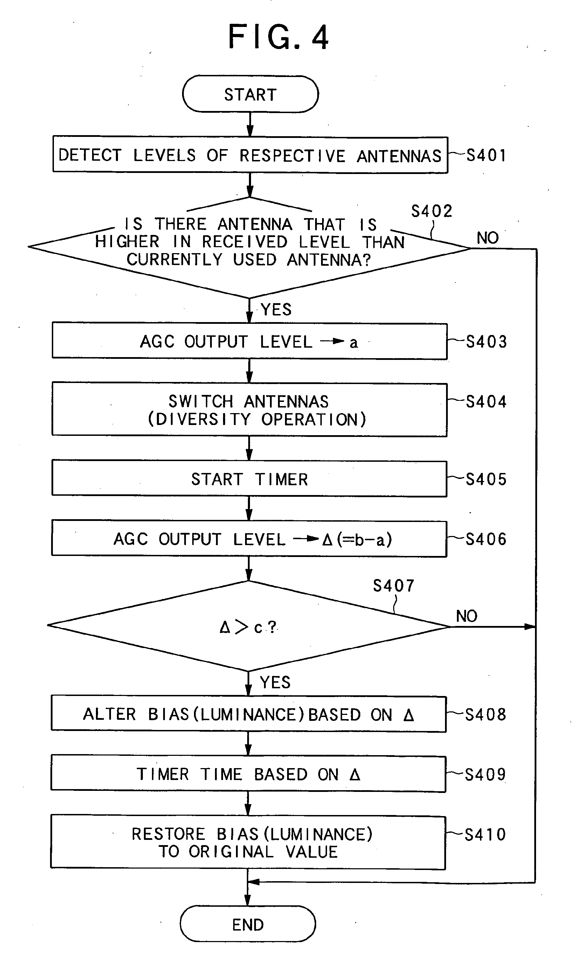

A first embodiment is a processing example in which the luminance in the video signal is lowered on the basis of the output level difference of the AGC circuit 203a. The received level of the received radio wave output from the tuner 203 and the output level of the AGC circuit 203a provided in the tuner 203 are provided to the switching control unit 206 as the state signal S3. FIG. 4 is a flow chart showing a luminance altering operation in the first embodiment.

First, the switching control unit 206 detects received levels of the antennas 201 received by the tuner 203 (step S401). The switching control unit 206 then determines whether there is an antenna 201 that is higher in received level than the currently used antenna 201 selected by the antenna selector 202 (step S402). If there is an antenna 201 that is higher in received level than the currently used antenna 201 (Yes at the step S402), processing at step S403 and subsequent processes is executed. If there is no antenna 201 that is higher in received level than the currently used antenna 201 (No at the step S402), the processing is finished without executing processing at the step S403 and subsequent processes.

The value of an output level "a" of the AGC circuit 203a at the time of reception using the currently selected antenna 201 is detected (step S403). Diversity operation of switching to another antenna 201 for which the detected received level is high is then conducted (step S404). At the same time, a timer which is not illustrated is started at the time of the antenna switching (step S405), and an output level "b" of the AGC circuit 203a is detected (step S406). A value Δ (Δ = b-a) of the output level variation is compared with a preset prescribed value "c" (step S407). If the value Δ of the output level variation is greater than the prescribed value "c" (Yes at the step S407), then the output level variation of the AGC circuit 203a is judged to be greater than the preset value and the luminance altering processing described below is conducted. On the other hand, if the value Δ of the output level variation is equal to or less than the prescribed value "c" (No at the step S407), then the processing is finished without executing the luminance altering processing.

The luminance altering processing includes outputting the control signal S2 to the luminance altering unit 204, conducting bias control in the luminance altering unit 204, and altering and lowering the luminance in the video signal Vₒᵤₜ (step S408). At this time, the output state of the control signal S2 may be altered according to the magnitude of the value Δ of the output level variation. For example, when the value Δ of the output level variation is large, the luminance reduction value can be increased by making the voltage value of the control signal S2 large correspondingly. When the value Δ of the output level variation is small, the luminance reduction value can be decreased by making the voltage value of the control signal S2 small correspondingly.

The applying time t of the control signal S2 can also be altered according to the magnitude of the value Δ of the output level variation (step S409). Specifically, when the value Δ of the output level variation is large, the timer time is set long correspondingly and the interval during which the luminance is lowered is prolonged. When the value Δ of the output level variation is small, the timer time is set short correspondingly and the interval during which the luminance is lowered is shortened. After the timer time at the step S409 has elapsed, the output of the control signal S2 is stopped and the luminance is restored to its original value (step S410). As a result, bias control in the luminance altering unit 204 is stopped and the luminance altering unit 204 finishes the luminance alteration for the video signal Vₒᵤₜ. Accordingly, the luminance of the video signal Vₒᵤₜ can be restored to its original value.

The reduction value of the luminance and the alteration of the timer time at the step S408 and the step S409 are set on the basis of a time constant included in the AGC circuit 203a. It takes time depending upon the RC time constant in the AGC circuit 203a for the AGC circuit 203a to conduct AGC operation and converge its output level to a constant value. At this time, the time taken until convergence differs depending upon the value Δ of the output level variation. The alteration of the reduction value of the luminance at the step S408 and the alteration of the timer time at the step S409 are executed according to the convergence time.

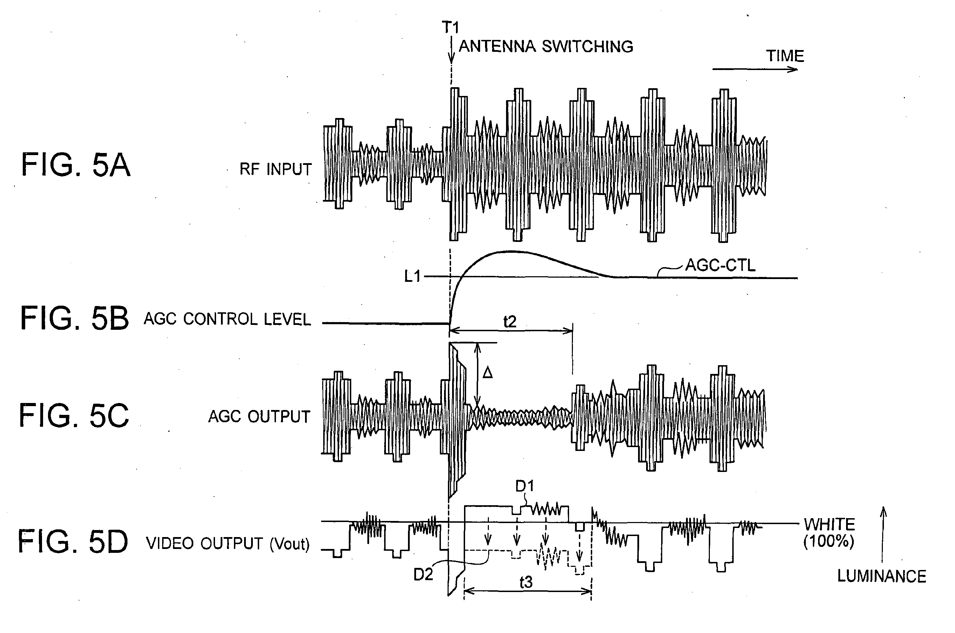

Contents of operation in the above-described configuration will now be described with reference to signal states at various points. FIG. 5 is a timing chart showing signal states at various points in the TV receiver. The abscissa of FIG. 5 indicates time. In FIG. 5, (a) represents an RF signal to be provided to the tuner 203, (b) represents a control output (AGC control level AGC-CTL) appearing when the AGC circuit 203a exercises AGC control, (c) represents an output level of the AGC circuit 203a, and (d) represents an output level of the video signal Vₒᵤₜ (the ordinate indicates the luminance).

At the time (time t1) of switching between antennas 201 at the step S404 shown in FIG. 4, the received level of the RF signal is increased as shown in (a) by switching to a new antenna. In response to this, the AGC circuit 203a changes the AGC control level AGC-CTL as shown in (b). The larger the variation in the received level of the RF signal shown in (a) is, the steeper the change characteristic of the AGC control level AGC-CTL becomes. The illustrated example corresponds to a state in which overshooting occurs. Over an interval (t2) which lasts until the AGC control level AGC-CTL shown in (b) converges to a stable constant value, the AGC circuit 203a outputs a decreased value as shown in (c). The value Δ (Δ = b-a) of the output level variation of the AGC circuit 203a described with reference to FIG. 4 is shown in (c). Over the interval t2, the sync separating unit 205 cannot obtain the vertical sync. Thus, until the interval t2 elapses and the AGC operation conducted by the AGC circuit 203a stabilizes since the antenna switching, the sync separating unit 205 cannot output the sync signal S4. Over this interval, the AGC circuit 203a generates a white noise generating cause for the video signal Vₒᵤₜ.

As shown in (d), the output level of the video signal Vₒᵤₜ output from the tuner 203 assumes a value of the white level or more (luminance 100%)(which is a signal level represented by D1 in (d)) over an interval t3 corresponding to the interval t2 which lasts until the AGC control level AGC-CTL converges to the stable constant value. If the video signal Vₒᵤₜ output from the tuner 203 were output as it was to the display unit, which is not illustrated, over the interval t3, white noise would appear on the display screen.

Here, the switching control unit 206 outputs the control signal S2 to the luminance altering unit 204 and lowers the luminance. The output level of the video signal Vₒᵤₜ after being passed through the switching control unit 206 becomes a signal level D2 represented by a broken line in (d), and the luminance is lowered. As a result, it becomes possible to reduce the white noise which has occurred. Especially when surroundings are dark according to the installment environment of the TV receiver and viewing time, it is possible to prevent white noise from appearing on a part of the display screen over the interval t3 and it is possible to lower the luminance of the white noise as much as possible and thereby make the white noise nearly gray. Since the luminance of a partial region in which white noise appears in normally displayed regions on the display screen can be lowered, it becomes possible to make the partial region having the white noise inconspicuous and prevent an unintended image from being displayed. Since the vertical sync is not obtained in the partial region of the display screen in which white noise appears, the original color cannot be displayed on the display screen in many cases. After the interval t3, the vertical synchronization is accomplished and the white noise does not appear and the whole display screen is returned to a state in which normal original tones of color can be displayed.

In the foregoing description, the voltage value of the control signal S2 is increased or decreased and the applying time t of the control signal S2 is altered according to the value Δ of the output level variation of the AGC circuit 203a. In this case, different values in a plurality of stages are prepared as the prescribed value "c" to be compared with at the step S407. At the step S408, a voltage value of the control signal S2 corresponding to a prescribed value "c" in the pertinent stage is output. At the step S409, the control signal S2 is output with an applying time t of the pertinent stage.

This is not restrictive and, alternatively, the voltage value of the control signal S2 may be made constant, and the applying time t of the control signal S2 may be made fixed. In this case, the prescribed value "c" to be compared with at the step S407 may be a single fixed value, and one predetermined voltage value is output as the control signal S2 at the step S408. At the step S409, the control signal S2 is output with one predetermined applying time t. Either one of the processing at the step S408 or the processing at the step S409 may be executed. The control processing can also be simplified in this way.

According to the configuration of the first embodiment, the luminance of the video signal can be lowered on the basis of the output level difference of the AGC circuit. When the AGC function works at the time of the antenna switching and the output level difference of the AGC circuit becomes large, it becomes possible to reduce white noise appearing on a part of the display screen.

### (Second Embodiment)

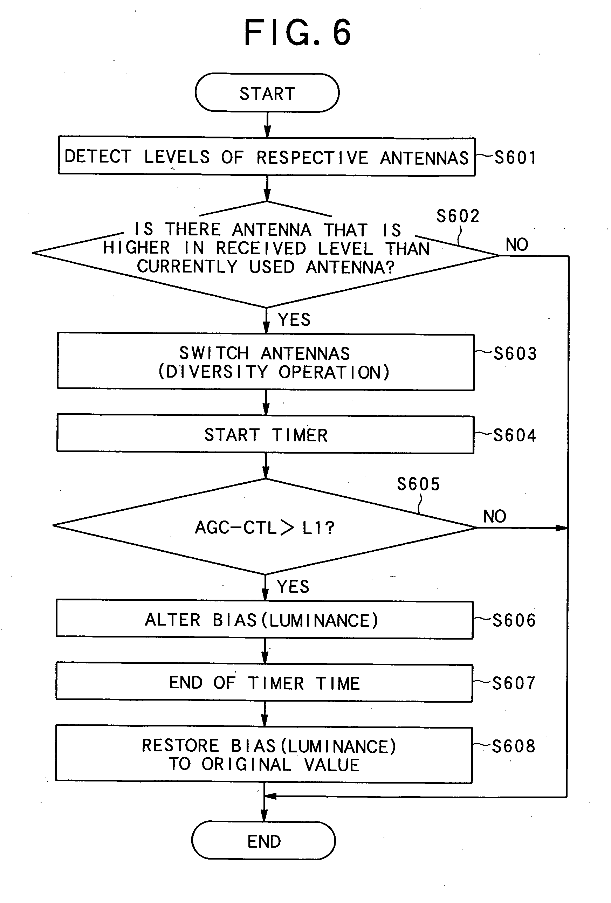

A second embodiment is a processing example in which the luminance in the video signal is lowered on the basis of the variation state of the AGC control level AGC-CTL shown in FIG. 5. The state signal S3 indicating the AGC control level is provided to the switching control unit 206 from the tuner 203. FIG. 6 is a flow chart showing a luminance altering operation in the second embodiment.

First, the switching control unit 206 detects received levels of the antennas 201 received by the tuner 203 (step S601). The switching control unit 206 then determines whether there is an antenna 201 that is higher in received level than the currently used antenna 201 selected by the antenna selector 202 (step S602). If there is an antenna 201 that is higher in received level than the currently used antenna 201 (Yes at the step S602), processing at step S603 and subsequent steps are executed. If there is no antenna 201 that is higher in received level than the currently used antenna 201 (No at the step S602), the processing is finished without executing processing at the step S603 and subsequent processes.

Subsequently, diversity operation of switching to another antenna 201 for which the detected received level is high is conducted (step S603). At the same time, a timer having a constant time which is not illustrated is started at the time of antenna switching (step S604).

Subsequently, the value of the AGC control level AGC-CTL that has varied because of the antenna switching is compared with a threshold L1 (step S605). The AGC control level AGC-CTL shown in FIG. 5 is a voltage value, and the threshold L1 can be previously set as a voltage value which does not reach the overshoot. If the value of the AGC control level AGC-CTL is greater than the threshold L1 (Yes at the step S605), then the AGC control level AGC-CTL is judged to be overshooting and the luminance altering processing described below is conducted. On the other hand, if the value of the AGC control level AGC-CTL is equal to or less than the threshold L1 (No at the step S605), then the processing is finished without executing the luminance altering processing.

The luminance altering processing includes outputting the control signal S2 to the luminance altering unit 204, conducting bias control in the luminance altering unit 204, and alters and lowers the luminance in the video signal Vₒᵤₜ (step S607). Thereafter, after the timer time of constant time has elapsed (step S607), output of the control signal S2 is stopped and the luminance is restored to the original value (step S608). As a result, the bias control in the luminance altering unit 204 is stopped, and the luminance altering unit 204 finishes the luminance alteration for the video signal Vₒᵤₜ. Accordingly, the luminance in the video signal Vₒᵤₜ can be restored to its original value.

In the above-described configuration, one threshold L1 is provided. A configuration in which a plurality of thresholds are provided and the timer time t is varied according to the thresholds may also be adopted. In this case, a longer timer time t is used each time a threshold having a higher voltage is exceeded according to the AGC control level AGC-CTL.

According to the configuration of the second embodiment, it is possible to detect the value of the AGC control level and lower the luminance in the video signal. When the AGC function works at the time of the antenna switching and the AGC control level varies largely, it becomes possible to reduce white noise appearing on a part of the display screen.

### (Third Embodiment)

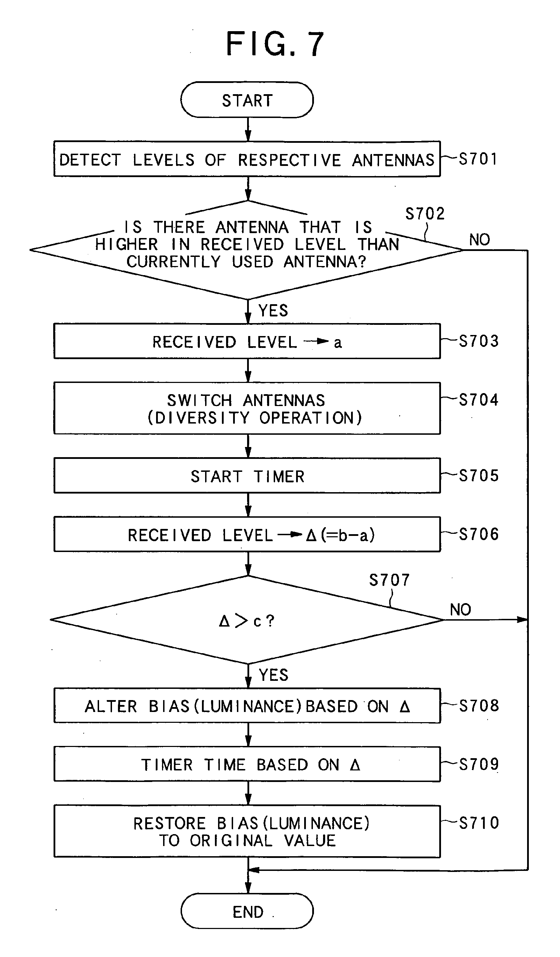

A third embodiment is a processing example in which the luminance in the video signal is lowered on the basis of the input level difference of the received radio wave (RF signal). The input level difference of the RF signal can be regarded as the same as the input level difference of the AGC circuit 203a. The received level of the received radio wave output from the tuner 203 is provided to the switching control unit 206 as the state signal S3. FIG. 7 is a flow chart showing a luminance altering operation in the third embodiment.

First, the switching control unit 206 detects received levels of the antennas 201 received by the tuner 203 (step S701). The switching control unit 206 then determines whether there is an antenna 201 that is higher in received level than the currently used antenna 201 selected by the antenna selector 202 (step S702). If there is an antenna 201 that is higher in received level than the currently used antenna 201 (Yes at the step S702), processing at step S703 and subsequent steps are executed. If there is no antenna 201 that is higher in received level than the currently used antenna 201 (No at the step S702), the processing is finished without executing processing at the step S703 and subsequent processes.

Subsequently, the value of a received level "a" at the time of reception using the currently selected antenna 201 is detected (step S703). Diversity operation of switching to another antenna 201 for which the detected received level is high is then conducted (step S704). At the same time, a timer which is not illustrated is started at the time of the antenna switching (step S705), and a received level "b" is detected (step S706). A value Δ (Δ = b-a) of the received level variation is compared with a preset prescribed value "c" (step S707). If the value Δ of the received level variation is greater than the prescribed value "c" (Yes at the step S707), then the received level variation is judged to be greater than the preset value and the luminance altering processing described below is conducted. On the other hand, if the value Δ of the received level variation is equal to or less than the prescribed value "c" (No at the step S707), then the processing is finished without executing the luminance altering processing.

The luminance altering processing includes outputting the control signal S2 to the luminance altering unit 204, conducting bias control in the luminance altering unit 204, and alters and lowers the luminance in the video signal Vₒᵤₜ (step S708). At this time, the output state of the control signal S2 can be altered according to the magnitude of the value Δ of the received level variation, or the applying time t of the control signal S2 can be altered according to the value Δ of the received level variation, in the same way as the first embodiment (step S709). After the timer time at the step S709 has elapsed, the output of the control signal S2 is stopped and the luminance is restored to its original value (step S710) . As a result, bias control in the luminance altering unit 204 is stopped and the luminance altering unit 204 finishes the luminance alteration for the video signal Vₒᵤₜ. Accordingly, the luminance of the video signal Vₒᵤₜ can be restored to its original value.

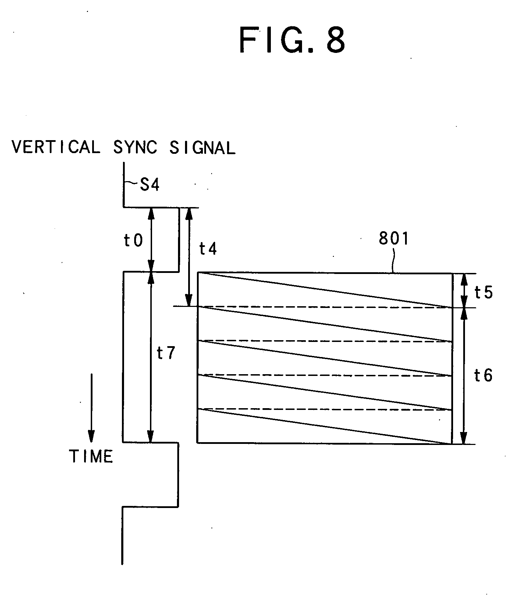

FIG. 8 is a diagram explaining correspondence between the vertical sync signal and the display screen. A vertical sync signal S4 shown in FIG. 8 is formed so as to conduct switching to some antenna 201 that is favorable in reception state within an interval (vertical sync retrace interval t0) over which any image is not displayed on a display screen 801. When the variation of the received level is large, however, the output level of the AGC circuit 203a (see FIG. 5(c)) comes in a state in which the synchronization cannot be accomplished over an interval (an interval t4 shown in FIG. 8) exceeding the vertical sync retrace interval t0 because of the time constant in the AGC circuit 203a. The interval t4 overlaps a video display interval t7. Correspondingly, white noise appears on a part (an upper position) of the display screen 801 only during a predetermined interval t5. Thus, in the case where the variation of the received level is large and the video signal is not clamped, it becomes possible to lower the luminance of white noise appearing in a partial region or the whole display region of the display screen 801 and make the white noise inconspicuous.

By the way, in a region on the display screen 801 corresponding to a predetermined interval t6, a screen of normal tone of color is displayed. A partial region of the predetermined interval t5 during which white noise appears is moved downward with time by scanning of screen display. White noise on the display screen 801 described with reference to FIG. 8 can be generated not only by the variation of the received level described with reference to the third embodiment, but also in the same way by each of the AGC output level difference in the first embodiment, the overshoot of the AGC control level AGC-CTL in the second embodiment, and impossibility of accomplishing the vertical synchronization in a fourth embodiment hereafter described.

According to the configuration of the third embodiment, it is possible to detect the variation in the received level and lower the luminance of the video signal. When the received level varies at the time of antenna switching and the AGC function has worked, it becomes possible to reduce white noise appearing on a part of the display screen.

### (Fourth Embodiment)

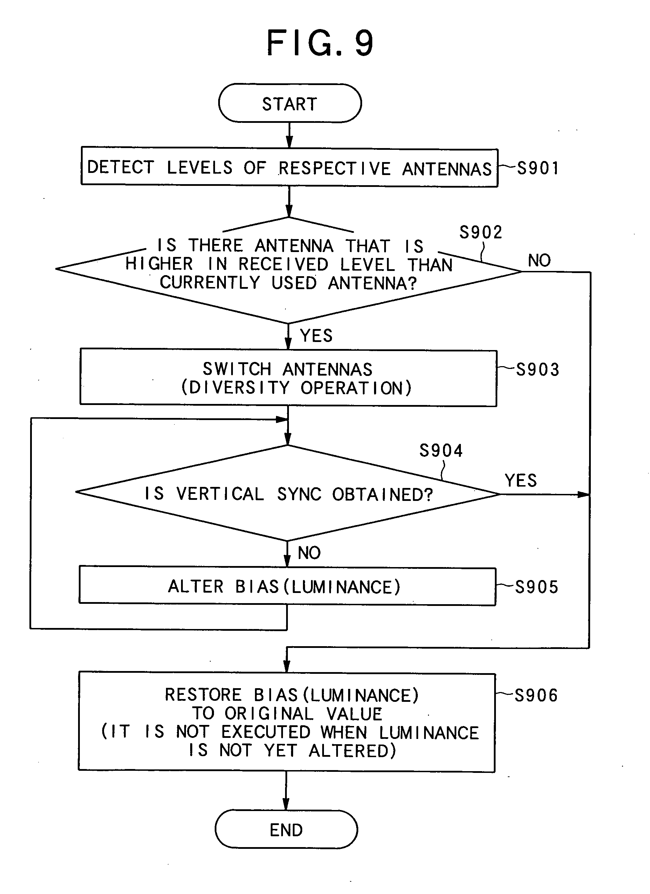

A fourth embodiment is a processing example in which the luminance in the video signal is lowered when it has become impossible to accomplish the vertical synchronization. The sync signal S4 output from the sync separating unit 205 is provided to the switching control unit 206. FIG. 9 is a flow chart showing a luminance altering operation in the fourth embodiment.

First, the switching control unit 206 detects received levels of the antennas 201 received by the tuner 203 (step S901). The switching control unit 206 then determines whether there is an antenna 201 that is higher in received level than the currently used antenna 201 selected by the antenna selector 202 (step S902). If there is an antenna 201 that is higher in received level than the currently used antenna 201 (Yes at the step S902), processing at step S903 and subsequent steps are executed. If there is no antenna 201 that is higher in received level than the currently used antenna 201 (No at the step S902), the processing is finished without executing processing at the step S903 and subsequent processes.

Subsequently, diversity operation of switching to another antenna 201 for which the detected received level is high is conducted (step S903). It is then determined whether the vertical synchronization is accomplished (step S904). If the sync separating unit 205 cannot accomplish the synchronization and the sync signal S4 is not provided to the switching control unit 206 (No at the step S904), then the vertical synchronization is judged not to be accomplished and the luminance altering processing described below is conducted. If the electric field is weak, the synchronization may not be accomplished sometimes even if any antenna 201 is selected. The antenna switching operation is conducted sometimes during the video display interval (the interval t7 shown in FIG. 8) . On the other hand, if the sync signal S4 is provided (Yes at the step S904), then the vertical synchronization is judged to be accomplished and the processing is finished without executing the luminance altering processing.

The luminance altering processing includes outputting the control signal S2 to the luminance altering unit 204, conducting bias control in the luminance altering unit 204, and alters and lowers the luminance in the video signal Vₒᵤₜ (step S905). The luminance alteringprocessing at the step S905 is continued until the vertical synchronization is accomplished again. In other words, when the processing returns to the step S904 and the vertical synchronization is accomplished (Yes at the step S904), output of the control signal S2 is stopped and the luminance is restored to the original value (step S906). As a result, the bias control in the luminance altering unit 204 is stopped, and the luminance altering unit 204 finishes the luminance alteration for the video signal Vₒᵤₜ. Accordingly, the luminance in the video signal Vₒᵤₜ can be restored to its original value. When there is no antenna that is higher in received level than the currently used antenna (No at the step S902), and when the vertical synchronization is accomplished from the beginning at the determination at the step S904 (Yes at the step S904), that is, when the luminance alteration at the step S905 is not conducted yet, the processing at the step S906 is not executed.

According to the configuration of the fourth embodiment, it is possible to detect the interval during which the video display synchronization is not accomplished and lower the luminance of the video signal. When the received level varies at the time of antenna switching and the synchronization is not accomplished, it becomes possible to reduce white noise appearing on a part of the display screen.

When units in the embodiments heretofore described are formed as hardware configurations using electronic circuit elements, the output levels "a" and "b" of the AGC circuit 203a may be temporarily stored in data storage units such as counters which are not illustrated. The configurations are not restricted to such hardware configurations, yet they may be formed by executing a program in a processor. In this case, an A/D converter is provided in each of signal input portions of the switching control unit 206, and a D/A converter is provided in each of signal output portions of the switching control unit 206. The processor conducts digital processing, and outputs control signals. In this case, the data storage unit can be formed by using a memory that temporarily stores data instead of a counter described with reference to the hardware configuration.

In the above-described embodiments, it is described an example of a configuration such that the antenna switching is basically conducted within the vertical sync retrace interval and white noise appearing on the display screen in the interval lasting until the AGC operation in the AGC circuit 203a converges is reduced. This is not restrictive, and the luminance of the white noise caused by the antenna switching can be lowered, even in a configuration in which the antenna switching is conducted in the screen display interval.

The embodiments heretofore described bring about an effect of reducing noise caused on the display screen at the time of antenna switching and making noise inconspicuous. Especially because of the configuration in which the luminance of the pertinent display region is lowered according to the interval in which noise has occurred, it is possible to bring about an effect of making the noise inconspicuous only in the region where the noise is occurring while maintaining the display contents of the display region in which the tone of color or the like is displayed normally.

This TV receiver can be applied to fields used for ground wave broadcast and communication, and it can be applied to apparatuses having other composite functions, such as navigation apparatuses incorporating this TV receiver. This TV receiver can also conduct stable screen display as a TV receiver mounted on a vehicle (such as an automobile, a train or a ship) in which the receiving state is apt to change.

In Fig. 2, detection of sync separation is taken from a portion between the tuner 203 and the luminance altering unit 204. It should be understood that detection of sync separation can be taken from a portion after the luminance altering unit 204 (for example, Vout after the luminance altering unit 204, or a portion after a clamping circuit after the luminance altering unit 204).

It should be understood that various alternatives to the embodiment of the invention described herein may be employed in practicing the invention. Thus, it is intended that the following claims define the scope of the invention and that methods and structures within the scope of these claims and their equivalents be covered thereby.

## Claims

1. A TV receiver **characterized in that** it comprises:
a plurality of antennas (201) which receive a transmission signal;
an antenna selecting device (202) which selects an antenna (201) from among the antennas (201);
a tuner (203) which demodulates the transmission signal received by the antenna (201) which is selected by the antenna selecting device (202), and outputs a display signal;
a luminance altering device (204) which alters luminance of the display signal output from the tuner (203) for a pertinent display region at the time of luminance altering control request; and
a switching control device (206) which controls the antenna selection in the antenna selecting device (202) and outputs the luminance altering control request to the luminance altering device (204) at the time of the antenna selection.

2. The TV receiver according to claim 1, wherein
the tuner (203) comprises an AGC device (203a) which varies a gain of the received transmission signal and which makes an output level of the transmission signal constant, and
the switching control device (206) detects a generation cause of noise given to the display signal by the AGC device (203a) at the time of the antenna selection, and outputs the luminance altering control request to the luminance altering device (204).

3. The TV receiver according to claim 1, wherein
the tuner (203) outputs a variation of a received level of the transmission signal to the switching control device (206), and
the switching control device (206) outputs the luminance altering control request on the basis of a variation difference of the received level at the time of the antenna selection.

4. The TV receiver according to claim 2, wherein
the AGC device (203a) outputs a variation of an input level of the transmission signal for the AGC device (203a) to the switching control device (206), and
the switching control device (206) outputs the luminance altering control request on the basis of a variation difference of the input level at the time of the antenna selection.

5. The TV receiver according to claim 2, wherein
the AGC device (203a) outputs a variation of the output level of the transmission signal output by the AGC device (203a) to the switching control device (206), and
the switching control device (206) outputs the luminance altering control request on the basis of a variation difference of the output level at the time of the antenna selection.

6. The TV receiver according to claim 2, wherein
the AGC device (203a) outputs to the switching control device (206) a level of an AGC control signal used when the AGC device (203a) makes the output level of the transmission signal constant, and
the switching control device (206) outputs the luminance altering control request on the basis of a level variation state of the AGC control signal at the time of the antenna selection.

7. The TV receiver according to claim 6, wherein the switching control device (206) outputs the luminance altering control request when the level variation state of the AGC control signal has exceeded a predetermined threshold.

8. The TV receiver according to claim 2, wherein the switching control device (206) requests the luminance altering control until the level variation has stabilized since the antenna selection.

9. The TV receiver according to claim 1, comprising:
a sync detecting device (205) which detects a synchronization state of the display signal output by the tuner (203),
wherein the switching control device (206) requests the luminance altering control while the sync detecting device (205) cannot detect the synchronization state.

10. A diversity receiving method **characterized in that** it comprises:
an antenna selecting process which selects an antenna (201) from among antennas (201) which have received a transmission signal;
a display signal output process which demodulates the transmission signal received by the antenna (201) which is selected at the antenna selecting process, and outputs a display signal;
a luminance altering process which alters luminance of the display signal output at the display signal output process for a pertinent display region at the time of luminance altering control request; and
a switching control process which controls the antenna selection at the antenna selecting process and requests the luminance altering control at the luminance altering process at the time of the antenna selection.

11. The diversity receiving method according to claim 10, wherein
the display signal output process comprises an AGC process which varies a gain of the received transmission signal and makes an output level of the transmission signal constant, and
the switching control process detects a generation cause of noise given to the display signal by the execution of the AGC process at the time of the antenna selection, and requests the luminance altering control at the luminance altering process.
